# EUROPÄISCHE PATENTSCHRIFT

(11) **EP 3 234 523 B1**
(45) Veröffentlichungstag und Bekanntmachung des Hinweises auf die Patenterteilung: **05.05.2021**
(21) Anmeldenummer: 15825903.6
(22) Anmeldetag: 17.12.2015
(51) Int. Cl.: G01G 19/24

(54) **EINRICHTUNG ZUR DOSIERUNG VON SCHÜTTGUT**
DEVICE FOR DOSAGE OF BULK MATERIAL
DISPOSITIF DE DOSAGE DE PRODUIT EN VRAC

(30) Priorität: 19.12.2014 AT 9262014
(43) Veröffentlichungstag der Anmeldung: 25.10.2017
(73) Patentinhaber: Wittmann Technology GmbH, 1220 Wien (AT)
(72) Erfinder: FUX, Erhard, 3451 Michelhausen (AT); PARADISO, Nicholas Arthur, Naugatuck, Connecticut 06770 (US)
(74) Vertreter: Felfernig, Oliver
(86) Internationale Anmeldenummer: PCT/AT2015/000160
(87) Internationale Veröffentlichungsnummer: WO 2016/094914

(56) Entgegenhaltungen:
- US-A1- 2002 113 080
- US-B2- 8 092 070

## Beschreibung

Die Erfindung betrifft eine Einrichtung zur Dosierung von Schüttgut, insbesondere von Kunststoff-Granulat, für Kunststoff-Granulat verarbeitende Maschinen, insbesondere für Spritzgussmaschinen, wobei eine Schüttgutzuführung, ein unter der Schüttgutzuführung angeordneter, aus mehreren, vorzugsweise vier, einzelnen abnehmbaren Materialtrichterbehältern bestehender, Materialtrichter endend in einem Dosier-Basisgerät und gegebenenfalls im Dosier-Basisgerätes ein Wiegebehälter mit einer Waage vorgesehen ist, die einzelnen Materialtrichterbehälter an einem Trägerkreuz angeordnet sind und das Trägerkreuz aus zueinander rechtwinkelig und vertikal angeordneten Trägerkreuz-Platten gebildet ist und am Gehäuse des Dosier-Basisgerätes montiert ist.

Aus der US 2002/113080 A und der US 8092070 B2 ist eine Einrichtung zur Herstellung von Granulatmischungen, insbesondere für die kunststoffverarbeitende Industrie, bekannt, wobei ein oder mehrere Trichter zur Aufbewahrung der unterschiedlichsten Kunststoffgranulate, eine darunter positionierte Wäge-Kammer zum Abwiegen der einzelnen Mischungsbestandteile aus den jeweiligen Trichtern, sowie zuunterst eine Mischkammer, von der aus die gebildete Granulatmischung beispielsweise in einen Extruder befördert wird, bekannt. Am Trichter weist zuoberst eine Deckplatte auf, die direkt am Trichter aufliegt und mit einer rechteckigen, insbesondere quadratischen Öffnung ausgestattet ist. Darüber hinaus weist die Einrichtung, insbesondere die US 2002/113080 A, ein Kreuz, bestehend aus senkrechten Blechen, zur Aufnahme der Trichter auf.

Aus der US 8 092 070 B2 ist ein gravimetrischer Mischer bekannt, bei dem in einem Rahmen mindestens ein Materiallagerbehälter angeordnet ist. An der Oberseite des Rahmens ist eine Abdeckplatte vorgesehen. Ein Wiegebehälter ist innerhalb des Rahmens unter dem Trichter angeordnet. Für die vertikale Bewegung der Abdeckplatte des Trichters sind Führungen vorgesehen, wobei die vertikalen Bewegungen über Kolben-Zylindersysteme durchgeführt werden. Nachteilig ist bei dieser Konstruktion der überaus aufwendige Aufwand zum Heben der Abdeckplatte.

Darüber hinaus ist aus der DE 696 27 717 T2 ein Verfahren und ein gravimetrischer Mischer zum Abgeben von abgemessenen Mengen von granularen Materialien und Farbmitteln, insbesondere Pigmente in flüssiger Form, bekannt.

Weiters ist aus der DE 05 075 472 T1 ein gravimetrischer Mischer und Fülltrichter mit integrierten Abgabeventil für körniges Material bekannt.

Ferner ist aus der DE 697 32 659 T2 ein gravimetrischer Mischer bekannt, der einen Rahmen, einen abnehmbaren Materialvorratstrichter mit einem Ventil, einen Wiegebehälter mit Gewichtserfassung und eine Mischkammer unter dem Wiegebehälter umfasst.

Aus der DE 195 28 636 A1 ist eine Einrichtung zum Fördern und Dosieren von Schüttgut bekannt, bei dem das Dosiergerät gleichzeitig als Fördergerät dient.

Weiters ist aus der US 2008/049546 A1 eine Fördereinrichtung bekannt, die mehrere Behälter aufweist.

Schließlich ist noch aus der US 3 822 866 A ein Verfahren zur Bereitstellung von Schüttgut vor der Dosierung bekannt. Es wird das Kunststoff-Granulat durch die Fördereinrichtung vor der Dosierung in zwei Behältern bereitgestellt. Dadurch wird vermieden, dass eine Totzeit eintritt, die durch eine Nachfüllung des Behälters eintreten kann.

Aufgabe der Erfindung ist es daher eine Einrichtung der eingangs genannten Art zu schaffen, die einerseits die obigen Nachteile vermeidet und die andererseits zu Rationalisierungen beim Reinigen der Einrichtung führt.

Die Aufgabe wird durch die Erfindung gelöst.

Die erfindungsgemäße Einrichtung ist dadurch gekennzeichnet, dass das Trägerkreuz eine Höhe aufweist, die mindestens der Höhe des Materialtrichterbehälters und der Eintauchtiefe des Materialtrichters in das Dosier-Basisgerät entspricht und dass am Trägerkreuz an dem dem Dosier-Basisgerät abgewandten Ende eine Materialtrichter-Abdeckung vorgesehen ist, wobei die Metalltrichter-Abdeckung (6) sich über den Materialtrichter (3) oder über einzelne Materialtrichterbehälter (2) erstreckt. Mit der Erfindung ist es erstmals möglich, eine Einrichtung zum Dosieren von Schüttgut, wie sie in der Kunststofftechnik üblich sind, durch eine hochintelligente, einfache konstruktive Gestaltung rationell und damit wirtschaftlich herzustellen. Es werden keine aufwendigen Maschinenteile, wie Pneumatik-Zylinder, spezielle Führungen für die Heb- und Senkbewegung der Abdeckung für die Materialtrichterbehälter, benötigt. Insbesondere der Vorgang der Reinigung der Materialtrichterbehälter kann in rationellster Weise - wie noch dargelegt wird - durchgeführt werden.
Wie ja an sich bekannt, werden die für die Rezeptur überproportionalen Mengen von Kunststoff-Granulat, vorzugsweise die Neuware und/oder Mahlgut, mit einer Parallelfüllung oder Mehrfachparallelfüllung, aus mindestens zwei Materialtrichterbehältern in den Wiegebehälter abgefüllt. Es ist also möglich, den Durchsatz für die Arten der Kunststoff-Granulate, die gemäß der Rezeptur überproportional Verwendung finden, zu erhöhen, wodurch die Batch-Zusammenstellung in kürzester Zeit erfolgt.
Es ist leicht einzusehen, dass die einzelnen Materialtrichterbehälter, beispielsweise bei einer Änderung des Granulates, sorgfältig gereinigt werden müssen. Eine weitere Rationalisierung des Gesamtablaufes wird durch die Verkürzung der Reinigungszeit erreicht. Ein einfaches Herausheben der einzelnen Materialtrichterbehälter aus dem Dosier-Basisgerät ist für deren Reinigung notwendig, so dass die Reinigung mit geringstem Zeitaufwand gewährleistet ist.
Mit der vorliegenden Erfindung wird in vorteilhafter Weise somit die Herstellung der Einrichtung wirtschaftlicher und darüber hinaus wird durch die Minimierung der Totzeit der Anlage für die Reinigung ein Rationalisierungseffekt erreicht.
Nach einem Merkmal der Erfindung weist die Metalltrichter-Abdeckung Öffnungen für die Zuführung des Schüttgutes von der Schüttgutzuführung in den

Materialtrichterbehälter auf. Dadurch wird die Schüttgutzuführung in einfachster Weise ermöglicht.

Gemäß einem besonderen Merkmal der Erfindung weist die Materialtrichter-Abdeckung in Richtung des Dosier-Basisgerätes ein Tauchrohr für die Zuführung des Schüttgutes auf. Durch die Anordnung dieses Tauchrohres, das vorzugsweise im oberen Bereich des Materialtrichterbehälters endet, ist eine Überfüllung des Materialtrichterbehälters mit Schüttgut praktisch ausgeschlossen.

Nach einer besonderen Ausgestaltung der Erfindung verjüngt sich der aus mehreren einzelnen Materialtrichterbehältern zusammengesetzte Materialtrichter in Richtung des Wiegebehälters, vorzugsweise pyramiden- oder kegelförmig. Durch diese konstruktive Maßnahme wird das Schüttgut dem Dosierventil und nachfolgend dem Wiegebehälter gezielt zugeführt.

Gemäß einer weiteren Ausgestaltung der Erfindung sind die die äußere Mantelfläche des Materialtrichters bildenden Seitenflächen jedes Materialtrichterbehälters im Bereich der Schüttgutzuführung höher, nämlich um mindestens der Eintauchtiefe des Materialtrichters in das Dosier-Basisgerät, ausgebildet, als die im Inneren am Trägerkreuz anliegenden Seitenflächen. Diese die Mantelfläche bildenden Seitenflächen liegen außen an der Materialtrichter-Abdeckung an. Dadurch ist auch das einfache Herausheben der einzelnen Materialtrichterbehälter gewährleistet.

Nach einer alternativen Ausgestaltung der Erfindung sind die die äußere Mantelfläche des Materialtrichters bildenden Seitenflächen jedes Materialtrichterbehälters im Bereich der Schüttgutzuführung aus Blechblenden gebildet, die eine Höhe aufweisen, die mindestens der Eintauchtiefe des Materialtrichters in das Dosier-Basisgerät entspricht. Auch diese Blenden liegen außen an der Materialtrichter-Abdeckung an, so dass das Herausheben der einzelnen Materialtrichterbehälter gewährleistet ist.

Gemäß einem weiteren besonderen Merkmal der Erfindung sind am Trägerkreuz Befestigungslaschen für die Materialtrichterbehälter vorgesehen. Durch diese Befestigungslaschen werden die einzelnen Materialtrichterbehälter in ihrer Lage gehalten bzw. stabilisiert, insbesondere auch wenn eine vertikale, nach oben gerichtete Öffnungskraft auf das Dosierventil ausgeübt wird.

Die Erfindung wird an Hand eines in der Zeichnung dargestellten Ausführungsbeispieles näher erläutert.

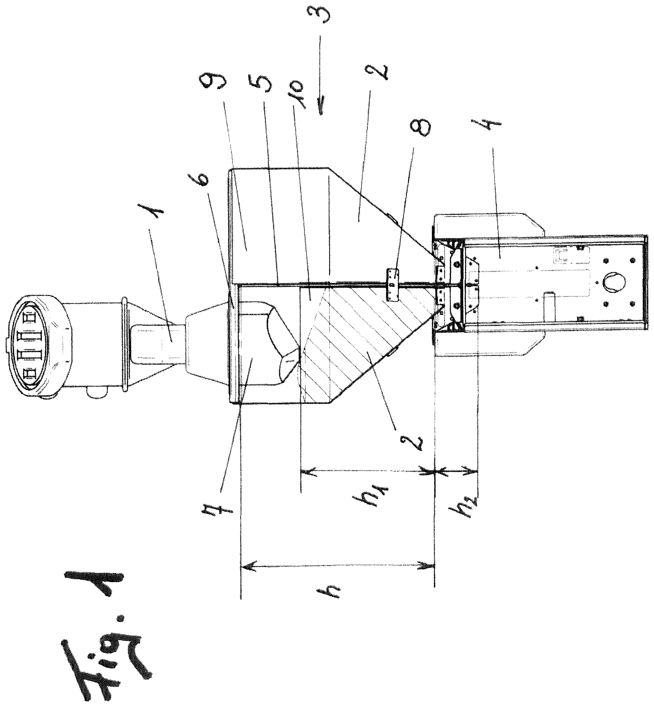

Es zeigen:
Fig. 1 einen Schnitt durch die Einrichtung und
Fig. 2 ein Trägerkreuz mit einer Materialtrichter-Abdeckung und einem Dosier-Basisgerät.
Die Einrichtung zur Dosierung von Schüttgut, insbesondere von Kunststoff-Granulat, für Kunststoff-Granulat verarbeitende Maschinen, insbesondere für Spritzgussmaschinen, ist modular aufgebaut. Die Einrichtung gemäß der Fig. 1 umfasst eine Schüttgutzuführung 1, beispielsweise einen Materialabscheider, einen unter der Schüttgutzuführung 1 angeordneten, aus mehreren, vorzugsweise vier, einzelnen abnehmbaren Materialtrichterbehältern 2 bestehenden, Materialtrichter 3. Der Materialtrichter 3 endet in einem Dosier-Basisgerät 4. Gegebenenfalls ist im Dosier-Basisgerätes 4 ein Wiegebehälter mit einer Waage vorgesehen. Die einzelnen Materialtrichterbehälter 2 sind an einem Trägerkreuz 5 angeordnet, wobei das Trägerkreuz 5 aus zueinander rechtwinkeligen und vertikal angeordneten Trägerkreuz-Platten 11 gebildet ist und das Trägerkreuz 5 im Dosier-Basisgerät 4 montiert ist.
Das Trägerkreuz 5 weist eine Höhe h auf, die mindestens der Höhe h₁ des Materialtrichterbehälters 2, die sich über dem Dosier-Basisgerät 4 erstreckt, und der Eintauchtiefe h₂ des Materialtrichterbehälters 2 in das Dosier-Basisgerät 4 entspricht. Am Trägerkreuz 5 ist an dem, dem Dosier-Basisgerät 4 abgewandten Ende eine Materialtrichter-Abdeckung 6 vorgesehen. Die Metalltrichter-Abdeckung 6 erstreckt sich über den Materialtrichter 3. Natürlich kann sie sich auch nur über einzelne Materialtrichterbehälter 2 erstrecken. Ferner weist die Metalltrichter-Abdeckung 6 Öffnungen 13 für die Zuführung des Schüttgutes von der Schüttgutzuführung 1 in den Materialtrichterbehälter 2 auf.
Weiters weist die Materialtrichter-Abdeckung 6 in Richtung des Dosier-Basisgerätes 4 ein Tauchrohr 7 für die Zuführung des Schüttgutes auf. Dieses Tauchrohr 7 dient zur Definierung der Höhe des Schüttkegels im Materialtrichterbehälter 2.

Durch Befestigungslaschen 8 am Trägerkreuz 5 werden die einzelnen Materialtrichterbehälter 2 in ihrer Lage gehalten bzw. stabilisiert, insbesondere auch wenn eine vertikale, nach oben gerichtete Öffnungskraft auf das Dosierventil ausgeübt wird.

Die die äußere Mantelfläche des Materialtrichters 3 bildenden Seitenflächen 9 jedes Materialtrichterbehälters 3 im Bereich der Schüttgutzuführung 1 sind höher, nämlich um mindestens der Eintauchtiefe h₂ des Materialtrichters 3 in das Dosier-Basisgerät 4, ausgebildet, als die im Inneren am Trägerkreuz 5 anliegenden Seitenflächen 10. Statt der höheren Seitenflächen 9 könnten natürlich auch Blechblenden Verwendung finden.

Zur leichteren Handhabung kann jeder Materialtrichterbehälter 2 zwei Griffe aufweisen. Zur bequemeren Reinigung und auch zur Sichtkontrolle kann jeder Materialtrichterbehälter 2 ein Sichtfenster aufweisen. Ferner kann der Materialtrichterbehälter 2 aus abnutzungsbeständigem Edelstahl bestehen.

Der aus mehreren einzelnen Materialtrichterbehältern 2 zusammengesetzte Materialtrichter 3 verjüngt sich in Richtung des Wiegebehälters, vorzugsweise pyramiden- oder kegelförmig.

Jeder Materialtrichterbehälter 2 weist an seinem unteren Ende, im Dosier-Basisgerät 4, ein Dosierventil auf. Darunter kann ein mit einer Waage verbundener Wiegebehälter und unter dem Wiegebehälter ein Mischer angeordnet sein. Als Waage kann eine Plattenformwägezelle und als Mischer ein Kugelmischer vorgesehen sein. Über eine Steuerung kann die Plattenformwägezelle mit dem Dosierventil verbunden sein.

Das Dosierventil kann als selbstschließendes Dosierventil ausgebildet sein, wobei die Öffnung des Dosierventils über einen, vorzugsweise am Dosier-Basisgerät 4 angeordneten Pneumatikzylinder erfolgt.

In der oben aufgezeigten Dosiereinrichtung werden verschiedene Mengen von verschiedenen Kunststoff-Granulaten nach frei einstellbaren Rezepten in Batches abgefüllt. Jede einzelne Art eines Kunststoff-Granulates, wie beispielsweise Neuware, Masterbatch, Additive und/oder Mahlgut, wird aus einem Materialtrichterbehälter 2 über das Dosierventil nacheinander in den Wiegebehälter abgelassen, im Wiegebehälter gewogen und die Rezeptmenge anschließend im Kugelmischer vermischt.

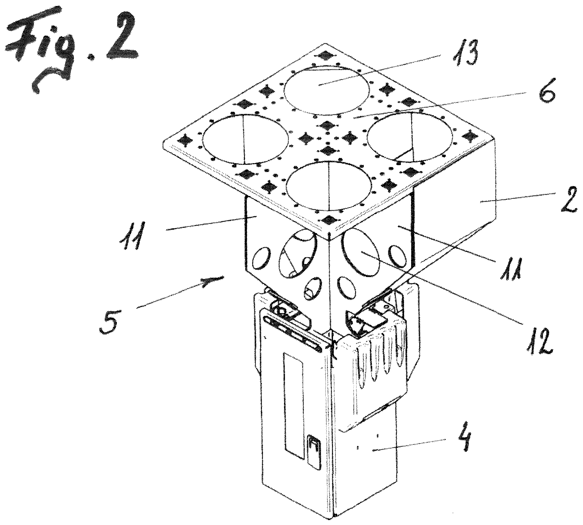

Gemäß der Fig. 2 ist das Trägerkreuz 5 gezeigt, das aus rechtwinkeligen, vertikalen Platten 11 gebildet ist. Zur Gewichtsersparnis können diese Platten 11 Ausnehmungen 12 aufweisen. Montiert ist das Trägerkreuz 5 im Dosier-Basisgerät 4. An dem, dem Dosier-Basisgerät 4 abgewandten Ende ist die Materialtrichter-Abdeckung 3 mit Öffnungen 13 für die Zuführung des Schüttgutes vorgesehen.

In der schaubildlich dargestellten Fig. 2 sind die vorderen Materialtrichterbehälter 2 heraus gehoben, - also nicht eingezeichnet -, um die Plattenkonstruktion des Trägerkreuzes 5 zu veranschaulichen. Der hintere Materialtrichterbehälter 2 ist hingegen sehr wohl dargestellt.

## Patentansprüche

1. Einrichtung zur Dosierung von Schüttgut, insbesondere von Kunststoff-Granulat, für Kunststoff-Granulat verarbeitende Maschinen, insbesondere für Spritzgussmaschinen, wobei eine Schüttgutzuführung (1), ein unter der Schüttgutzuführung (1) angeordneter, aus mehreren, vorzugsweise vier, einzelnen abnehmbaren Materialtrichterbehältern (2) bestehender, Materialtrichter (3) endend in einem Dosier-Basisgerät (4) und gegebenenfalls im Dosier-Basisgerätes (3) ein Wiegebehälter mit einer Waage vorgesehen ist, die einzelnen Materialtrichterbehälter (2) an einem Trägerkreuz (5) angeordnet sind und das Trägerkreuz (5) aus zueinander rechtwinkelig und vertikal angeordneten Trägerkreuz-Platten (11) gebildet ist und am Gehäuse des Dosier-Basisgerätes (4) montiert ist, **dadurch gekennzeichnet, dass** das Trägerkreuz (5) eine Höhe (h) aufweist, die mindestens der Höhe (h₁) des Materialtrichterbehälters (2), die sich über dem Dosier-Basisgerät (4) erstreckt, und der Eintauchtiefe (h₂) des Materialtrichters (3) in das Dosier-Basisgerät (4) entspricht und dass am Trägerkreuz (5) an dem, dem Dosier-Basisgerät (4), abgewandten Ende eine Materialtrichter-Abdeckung (6) vorgesehen ist, wobei die Metalltrichter-Abdeckung (6) sich über dem Materialtrichters (3) oder über einzelne Materialtrichterbehälter (2) erstreckt.

2. Einrichtung nach Anspruch 1, **dadurch gekennzeichnet, dass** die Metalltrichter-Abdeckung (6) Öffnungen (13) für die Zuführung des Schüttgutes von der Schüttgutzuführung (1) in den Materialtrichterbehälter (2) aufweist.

3. Einrichtung nach Anspruch 1 oder 2, **dadurch gekennzeichnet, dass** die Materialtrichter-Abdeckung (6) in Richtung des Dosier-Basisgerätes (4) ein Tauchrohr (7) für die Zuführung des Schüttgutes aufweist.

4. Einrichtung nach einem oder mehreren der Ansprüche 1 bis 3, **dadurch gekennzeichnet dass** der aus mehreren einzelnen Materialtrichterbehältern (2) zusammengesetzte Materialtrichter (3) sich in Richtung des Wiegebehälters, vorzugsweise pyramiden- oder kegelförmig, verjüngt.

5. Einrichtung nach einem oder mehreren der Ansprüche 1 bis 4, **dadurch gekennzeichnet, dass** die die äußere Mantelfläche des Materialtrichters (3) bildenden Seitenflächen (9) jedes Materialtrichterbehälters (2) im Bereich der Schüttgutzuführung (1) höher, nämlich um mindestens der Eintauchtiefe (h₂) des Materialtrichters (3) in das Dosier-Basisgerät (4), ausgebildet sind als die im Inneren am Trägerkreuz (5) anliegenden Seitenflächen (10).

6. Einrichtung nach einem oder mehreren der Ansprüche 1 bis 5, **dadurch gekennzeichnet, dass** die die äußere Mantelfläche des Materialtrichters (3) bildenden Seitenflächen (9) jedes Materialtrichterbehälters (2) im Bereich der Schüttgutzuführung (1) aus Blechblenden gebildet sind, die eine Höhe aufweisen, die mindestens der Eintauchtiefe (h₂) des Materialtrichters (3) in das Dosier-Basisgerät (4) entspricht.

7. Einrichtung nach einem oder mehreren der Ansprüche 1 bis 6, **dadurch gekennzeichnet, dass** am Trägerkreuz (5) Befestigungslaschen (8) für die Materialtrichterbehälter (2) vorgesehen sind.

## Claims

1. Device for metering bulk material, in particular plastic granules, for machines processing plastic granules, in particular for injection molding machines, wherein a bulk material feed (1), a material hopper (3) arranged under the bulk material feed (1) and consisting of several, preferably four, individual removable material hopper containers (2) that ends in a metering base device (4) and, where appropriate, in the metering base device (4) a weighing container with a scale is provided, the individual material hopper containers (2) being arranged on a support cross (5) and the support cross (5) formed from support cross plates (11) arranged at right angles to one another and vertically and mounted on the housing of the metering base device (4), **characterized in that** the support cross (5) has a height (h) that corresponds at least to the height (h₁) of the material hopper (2) extending above the metering base device (4) and to the immersion depth (h₂) of the material hopper (3) into the metering base device (4), and **in that** on the support cross (5) on the end facing away from the metering base device (4) a material hopper cover (6) is provided, whereby the metal hopper cover (6) extends over the material hopper (3) or over individual material hopper containers (2).

2. Device according to claim 1, **characterized in that** the metal hopper cover (6) has openings (13) for feeding in the bulk material from the bulk material feed (1) into the material hopper container (2).

3. Device according to claim 1 or 2, **characterized in that** in the direction of the metering base device (4) the material hopper cover (6) has a dip tube (7) for feeding in the bulk material.

4. Device according to one or several of claims 1 to 3, **characterized in that** the material hopper (3) composed of several individual material hopper containers (2) tapers in the direction of the weighing container, preferably in a pyramid or cone shape.

5. Device according to one or several of claims 1 to 4, **characterized in that** the side faces (9) of each material hopper container (2) forming the outer lateral surface of the material hopper (3) in the area of the bulk material feed (1) are formed higher, namely by at least the immersion depth (h₂) of the material hopper (3) in the metering base device (4), than the side surfaces (10) abutting upon the support cross (5) in the interior are.

6. Device according to one or several of claims 1 to 5, **characterized in that** the side faces (9) of each material hopper container (2) forming the outer lateral surface of the material hopper (3) in the area of the bulk material feed (1) are made from sheet metal screens that have a height corresponding at least to the immersion depth (h₂) of the material hopper (3) in the metering base device (4).

7. Device according to one or several of claims 1 to 6, **characterized in that** fastening lugs (8) for the material hopper containers (2) are provided on the support cross (5).

## Revendications

1. Dispositif pour le dosage de produits en vrac, en particulier de granulés plastiques, destinés aux machines de transformation des plastiques, en particulier aux machines de moulage par injection, un chargement des produits en vrac (1), une trémie à matière (3) installée au-dessous du chargement des produits en vrac (1) et composée de plusieurs, de préférence quatre, bacs de la trémie à matière (2) amovibles individuellement, se terminant dans un appareil de base de dosage (4) et, le cas échéant, dans l'appareil de base de dosage (4), un récipient de pesée avec une balance étant prévus, les différents bacs de la trémie à matière (2) sont installés sur un support en croix (5) et le support en croix (5) est constitué de plaques de support en croix (11) disposées à la verticale et perpendiculairement les unes par rapport aux autres et est monté sur le boîtier de l'appareil de base de dosage (4), **caractérisé en ce que** la hauteur (h) du support en croix (5) est supérieure ou égale à la hauteur (h₁) du bac de la trémie à matière (2), qui se trouve au-dessus de l'appareil de base de dosage (4), et correspond à la profondeur d'insertion (h₂) de la trémie à matière (3) dans l'appareil de base de dosage (4) et qu'un recouvrement de la trémie en métal (6) est prévu sur la face opposée à l'appareil de base de dosage (4) du support en croix (5), le recouvrement de la trémie en métal (6) se trouvant au-dessus de la trémie à matière (3) ou au-dessus de certains bacs de la trémie à matière (2).

2. Dispositif selon la revendication 1, **caractérisé en ce que** le recouvrement de la trémie en métal (6) comporte des orifices (13) pour le chargement des produits en vrac, du chargement des produits en vrac (1) dans le bac de la trémie à matière (2).

3. Dispositif selon la revendication 1 ou 2, **caractérisé en ce que** le capotage de la trémie à matière (6) comporte, en direction de l'appareil de base de dosage (4), un tube plongeur (7) pour le chargement des produits en vrac.

4. Dispositif selon une ou plusieurs des revendications 1 à 3, **caractérisé en ce que** la trémie à matière (3) qui se compose de plusieurs bacs de la trémie à matière (2) se rétrécit en direction du récipient de pesée, de préférence à forme conique ou pyramidale.

5. Dispositif selon une ou plusieurs des revendications 1 à 4, **caractérisé en ce que** les surfaces latérales (9), qui constituent la surface extérieure de l'enveloppe de la trémie à matière (3), de chaque bac de la trémie à matière (2) dans la zone de chargement des produits en vrac (1) sont composées de caches en tôle, dont la hauteur est supérieure ou égale à celle des surfaces latérales (10) en contact avec le support en croix (5) à l'intérieur, c.-à-d. supérieure ou égale à la profondeur d'insertion (h₂) de la trémie à matière (3) dans l'appareil de base de dosage (4).

6. Dispositif selon une ou plusieurs des revendications 1 à 5, **caractérisé en ce que** les surfaces latérales (9), qui constituent la surface extérieure de l'enveloppe de la trémie à matière (3), de chaque bac de la trémie à matière (2) dans la zone de chargement des produits en vrac (1) sont composées de caches en tôle, dont la hauteur est supérieure ou égale à la profondeur d'insertion (h₂) de la trémie à matière (3) dans l'appareil de base de dosage (4).

7. Dispositif selon une ou plusieurs des revendications 1 à 6, **caractérisé en ce que** des pattes de fixation (8) sont prévues sur le support en croix (5) pour le bac de la trémie à matière (2).
